# EUROPEAN PATENT SPECIFICATION

(11) **EP 2 197 961 B1**
(45) Date of publication and mention of the grant of the patent: **19.08.2015**
(21) Application number: 08766851.3
(22) Date of filing: 27.06.2008
(51) Int. Cl.: C09D 5/38, B01D 39/20, C09D 183/04, B01D 46/00, C08K 5/00

(54) **USE OF A SILICONE-CONTAINING COATING WHICH IS EFFECTIVE AGAINST POLLEN**
VERWENDUNG EINES SILICONHALTIGEN LACKS MIT WIRKUNG GEGEN POLLEN
UTILISATION D'UN REVÊTEMENT CONTENANT DU SILICONE QUI EST EFFICACE CONTRE LE POLLEN

(30) Priority: 12.10.2007 NL 2000925
(43) Date of publication of application: 23.06.2010
(73) Proprietor: In2Care Holding B.V., 6709 PG WAGENINGEN (NL)
(72) Inventor: OSINGA, Anne Jurjen, 3235 AC Rockanje (NL)
(74) Representative: Klavers, Cornelis
(86) International application number: PCT/NL2008/050428
(87) International publication number: WO 2009/048324

(56) References cited:
- WO-A-00/72941
- WO-A-03/054062
- US-A- 4 227 899
- US-A- 4 626 265

## Description

The present invention relates to the use of coating applied to or impregnated in a filter, gauze or screen, in a pollen filter. The coating comprising a preparation having a cross-linked silicone particle composition and platinum metal acting as a catalyst.

The present invention relates to a use of said filter, gauze or screen material, in which the coating is to be incorporated in or applied to a fabric or tissue.

Such a coating is known from WO 2003/054062. The content of said patent specification shall be considered to be fully incorporated herein. The coating that is known therefrom concerns a water-based suspension of crosslinked silicone particles and a water-based emulsion of oil that contains crosslinked silicone particles. Such coatings are used in cosmetic articles and in certain types of environmentally friendly paint.

US-4,227,899 discloses the so called absolute fluid filters, normally used under harsh process conditions, for removing particulate matter from gas streams. A filter material is coated with a composition comprising a silicone and several possible coating solutions. These filters show an overly particulate electrostatic attraction which is suggested to be controlled in order to prevent the filter from building up said matter and to render said filter easily and non-destructively cleanable and reusable. No filter material or use thereof is disclosed or even suggested in relation to pollen filters.

WO 00/72941 wherefrom claim 1 is delimited discloses a filter, gauze or screen material to which a coating has been applied and/or in which the coating has been impregnated, the coating comprising a preparation having a cross-linked silicone particle composition that is siloxane and a platinum complex catalyst. The filters are useful, for example, as air filters and vent filters for intravenous or other medical devices. Solutions are suggested to provide both hydrophobic (water repellent) and oleophobic (oil repellent) properties to such filters, excluding the passage of liquid while allowing passage of vapors and gasses therethrough. A cross-linker catalyst formulation is suggested normally containing 1-100 ppm, more preferably 5-10 ppm platinum in the form of platinum 1,3-diethylenyl-1,1,3,3-tetramethyldisiloxane complexes, calculated as the weight of the noble metal catalyst. Again no filter material or use thereof is disclosed or even suggested in relation to pollen filters.

The object of the invention is to extend the field of application of such coatings to pollen filters.

In order to accomplish that object, the coating composition is incorporated in or applied to a fabric or tissue, wherein the fabric or tissue are used in a filter, gauze or screen material, the coating composition comprising A) a water-based silicone emulsion and B) a water-based platinum catalyst emulsion prepared respectively as follows: A) 94.8 weight parts dimethylvinylsiloxy-endblocked dimethylpolysiloxane having a viscosity at 25°C of 400 mm2/s containing 2.5 wt.% of a mixture having a viscosity at 25°C of approximately 20 mm2/ s of dimethylsiloxane cyclics was mixed to homogeneity with 5.2 weight parts trimethylsiloxyendblocked dimethylsiloxane methylhydrogensiloxane copolymer having a viscosity at 25°C of 50 mm2/s, having a silicon-bonded hydrogen content of 0.31 wt.%, this quantity provides a value of 0.95 for the molar ratio of the silicon-bonded hydrogen to the vinyl in the dimethylpolysiloxane, whereto is added an aqueous solution of 30 weight parts pure water and 1.0 weight part polyoxyethylene hexyldecyl ether surfactant, which is the ethylene oxide adduct of isocetyl alcohol of vegetable oil origin, wherein the number of moles of ethylene oxide addition is 10, the surfactant has a HLB of 13.4, and is liquid at room temperature; followed by emulsification using a colloid mill and then dilution with 30 weight parts pure water to give a water-based silicone composition emulsion; B) the platinum catalyst is a water-based platinum catalyst emulsion with an average particle size of 0.2 µm is prepared as follows: 1 weight part of a 1,3 divinyltetramethyldisiloxane and isopropyl alcohol mixed solution of a 1,3-divinyltetramethyldisiloxane complex of platinum is stirred to homogeneity into an aqueous solution of 27 weight parts ion-exchanged water and 0.3 weight part of the above-identified surfactant; thereafter the water-based platinum catalyst emulsion is stirred to homogeneity, in an amount that provides 5 weight ppm platinum metal in relation to the silicone composition, into the water-based silicone composition emulsion prepared as described above thus adjusting the surface resistance making it possible to influence the charge on the surface of the coating; which is followed by holding at quiescence for one day to give a water-based suspension of crosslinked silicone particles through the hydrosilylation-induced crosslinking of the silicone composition, wherein the average particle size of the crosslinked silicone particles in the resulting water-based suspension is 4.4 µm, and the 90% particle size is 7.5 µm, characterized in that the coated or impregnated fabric or tissue is used in pollen filters to capture particles such as pollen, germs and spores from the air that cause irritation or allergic reactions by means of a charge which is opposite to that of said particles to be removed from the air flowing past and/or through said fabric or tissue.

It has surprisingly been found that although a silicone-containing coating repels pollen particles, the addition thereto of a preparation by means of which the surface resistance can be adjusted makes it possible to influence the charge on the surface of the coating. After all, a low surface resistance causes a charge on the surface to drain off, whilst a high surface resistance keeps the electrostatic charge thereon intact. Said charge furthermore appears to have a polarity opposed to that of the particles that cause irritation or allergic reactions, for example pollen, germs, and spores, so that the coatings according to the invention appear to be able to capture said particles in an effective manner from passing air.

The inventive composition of the coating according to the invention, which will be described in more detail hereinafter, and which is explained in particular in paragraph [42] of WO 2003/054062, moreover feels dry to the touch with the fingers.

The coating that contains the silicone composition and the preparation by means of which the surface resistance can be controlled comprises the platinum metal which also acts as a catalyst. The platinum metal complex is known to conduct the electric charge well, depending on the concentration of the metal or the metal compound.

In practice the amount of platinum metal in the is preparation 5 ppm in relation to the silicone composition. The formulation of the latter composition and the preparation thereof will be discussed in more detail hereinafter.

In practical applications of the coating, a fabric or tissue is drenched in the coating or the coating is sprayed or atomized over the fabric or the tissue. Said fabric or tissue may also be impregnated with the coating.

The fabric or the tissue can be used specifically as a filter, gauze or screen material in particular for use in windows and entrance openings, such as doors, for removing the particles that cause irritation or allergic reactions, such as pollen, germs, spores and the like from the air flowing therethrough.

After all, said particles are attracted by the coating, which has a charge opposed to that of the particles, and subsequently adhere thereto and/or to the coating film in the fabric and/or the tissue.

The filter material provided with the is coating used in pollen filters, for example in vehicles such as automobiles, or airplanes, and in air-conditioning units or air or pollen filters, for example.

The inventive coating for use as a 'pollen coating' is the coating described in paragraph 42 of WO 2003/054062. The details of said coating are as follows:

94.8 weight parts dimethylvinylsiloxy-endblocked dimethylpolysiloxane (400 mm²/s) containing 2.5 wt.% of an approximately 20 mm²/s mixture of dimethylsiloxane cyclics was mixed to homogeneity with 5.2 weight parts trimethylsiloxy-endblocked dimethylsiloxane methylhydrogensiloxane copolymer (50 mm²/s, silicon-bonded hydrogen content = 0.31 wt.%, this quantity provided a value of 0.95 for the molar ratio of the silicon-bonded hydrogen to the vinyl in the dimethylpolysiloxane). To this was then added an aqueous solution of 30 weight parts pure water and 1.0 weight part polyoxyethylene hexyldecyl ether (NIKKOL BH-10 from Nikko Chemicals Co., Ltd., ethylene oxide adduct of isocetyl alcohol of vegetable oil origin, number of moles of ethylene oxide addition = 10, HLB = 13.4, liquid at room temperature) followed by emulsification using a colloid mill and then dilution with 30 weight parts pure water to give a water-based silicone composition emulsion.

A water-based platinum catalyst emulsion with an average particle size of 0.2 µm was prepared as follows: 1 weight part of a 1,3-divinyltetramethyldisiloxane and isopropyl alcohol mixed solution of a 1,3-divinyltetramethyldisiloxane complex of platinum was stirred to homogeneity into an aqueous solution of 27 weight parts ion-exchanged water and 0.3 weight part of the above-identified polyoxyethylene hexyldecyl ether (NIKKOL BH-10 from Nikko Chemicals Co. Ltd., number of moles of ethylene oxide addition = 10, HLB = 13.4, liquid at room temperature).

The water-based platinum catalyst emulsion was stirred to homogeneity, in this specific case in an amount that provided 5 weight ppm platinum metal in relation to the silicone composition, into the water-based silicone composition emulsion prepared as described above. This was followed by holding at quiescence for one day to give a water-based suspension of crosslinked silicone particles through the hydrosilylation-induced crosslinking of the silicone composition. The average particle size of the crosslinked silicone particles in the resulting water-based suspension was 4.4 µm 90% particle size 7.5 µm, and the suspension stability, the height of the water layer, was 10 mm, whilst the surfactant HLB, which is the weighted average value when two species of surfactants were used, was 13.4.

It has been found that in particular the platinum material acts as a catalyst and at the same time places an electrostatic charge on the silicone particles. Said charge uniformly attracts the pollen, whilst subsequently the light charge of the silicone emulsion keeps the pollen in place. It has been found that the formation of a film around the fibres of the gauze is important with a view to keeping the pollen in place as well as possible. The precious metal platinum has a varying oxidation step of +4 and +2 and an electronegativity of 2.28, resulting in a rather large attraction on small floating pollen. The advantage is that platinum does not decay with the passage of time and retains its advantageous characteristics for the application in question, even after the gauze is washed. Furthermore it hardly reacts with oxygen in the air or in the water, and consequently does not oxidise.

## Claims

1. Use of a coating composition for being incorporated in or applied to a fabric or tissue, wherein the fabric or tissue are used in a filter, gauze or screen material, the coating composition comprising A) a water-based silicone emulsion and B) a water-based platinum catalyst emulsion prepared respectively as follows: A) 94.8 weight parts dimethylvinylsiloxy-endblocked dimethylpolysiloxane having a viscosity at 25°C of 400 mm2/s containing 2.5 wt.% of a mixture having a viscosity at 25°C of approximately 20 mm2/s of dimethylsiloxane cyclics was mixed to homogeneity with 5.2 weight parts trimethylsiloxyendblocked dimethylsiloxane methylhydrogensiloxane copolymer having a viscosity at 25°C of 50 mm2/s, having a silicon-bonded hydrogen content of 0.31 wt.%, this quantity provides a value of 0.95 for the molar ratio of the silicon-bonded hydrogen to the vinyl in the dimethylpolysiloxane, whereto is added an aqueous solution of 30 weight parts pure water and 1.0 weight part polyoxyethylene hexyldecyl ether surfactant, which is the ethylene oxide adduct of isocetyl alcohol of vegetable oil origin, wherein the number of moles of ethylene oxide addition is 10, the surfactant has a HLB of 13.4, and is liquid at room temperature; followed by emulsification using a colloid mill and then dilution with 30 weight parts pure water to give a water-based silicone composition emulsion; B) the platinum catalyst is a water-based platinum catalyst emulsion with an average particle size of 0.2 µm is prepared as follows: 1 weight part of a 1,3 divinyltetramethyldisiloxane and isopropyl alcohol mixed solution of a 1,3-divinyltetramethyldisiloxane complex of platinum is stirred to homogeneity into an aqueous solution of 27 weight parts ion-exchanged water and 0.3 weight part of the above-identified surfactant; thereafter the water-based platinum catalyst emulsion is stirred to homogeneity, in an amount that provides 5 weight ppm platinum metal in relation to the silicone composition, into the water-based silicone composition emulsion prepared as described above thus adjusting the surface resistance making it possible to influence the charge on the surface of the coating; which is followed by holding at quiescence for one day to give a water-based suspension of crosslinked silicone particles through the hydrosilylation-induced crosslinking of the silicone composition, wherein the average particle size of the crosslinked silicone particles in the resulting water-based suspension is 4.4 µm, and the 90% particle size is 7.5 µm, **characterized in that** the coated or impregnated fabric or tissue is used in pollen filters to capture particles such as pollen, germs and spores from the air that cause irritation or allergic reactions by means of a charge which is opposite to that of said particles to be removed from the air flowing past and/or through said fabric or tissue.

2. Use of the coating according to claim 1 wherein the fabric or tissue is applied in a filter.

3. Use of the coating according to claims 1 or 2,
**characterised in that** said fabric or said tissue is prepared by passing through a coating bath and/or that the coating is sprayed thereon.

## Patentansprüche

1. Verwendung einer Beschichtungszusammensetzung zum Einarbeiten in oder Aufbringen auf einen Stoff oder ein Gewebe, wobei der Stoff oder das Gewebe in einem Filter-, Gaze- oder Siebmaterial verwendet werden, wobei die Beschichtungszusammensetzung A) Siliconemulsion auf Wasserbasis und B) eine Platinkatalysatoremulsion auf Wasserbasis umfasst, die jeweils wie folgt hergestellt werden: A) 94,8 Gewichtsteile mit Dimethylvinylsiloxy endblockiertes Dimethylpolysiloxan, das eine Viskosität bei 25 °C von 400 mm²/s aufweist und 2,5 Gew.-% einer Mischung enthält, die eine Viskosität bei 25 °C von etwa 20 mm²/s aufweist, von Dimethylsiloxan-Cycli, wurde bis zur Homogenität mit 5,2 Gewichtsteilen mit Trimethxylsiloxy endgeblocktem Dimethylsiloxan-Methylhydrogensiloxan-Copolymer gemischt, das eine Viskosität bei 25 °C von 50 mm²/s aufweist und einen Gehalt von an Silicium gebundenem Wasserstoff von 0,31 Gew.-% aufweist, wobei diese Menge einen Wert von 0,95 für das Molverhältnis des siliciumgebundenen Wasserstoffs zu dem Vinyl in dem Dimethylsiloxan bereitgestellt, dem eine wässrige Lösung von 30 Gewichtsteilen reines Wassers und 1,0 Gewichtsteilen Polyoxyethylenhexyldecylether-Tensid zugegeben wird, das das Ethyloxidaddukt von Isocetylalkohol von Pflanzenölursprung ist, wobei die Anzahl von Molen von Ethylenoxidzusatz 10 beträgt, das Tensid einen HLB-Wert von 13,4 aufweist und bei Raumtemperatur flüssig ist; gefolgt von Emulgierung unter Anwendung einer Kolloidmühle und dann Verdünnung mit 30 Gewichtsteilen reinem Wasser, um eine Siliconzusammensetzungsemulsion auf Wasserbasis zu ergeben; B) der Platinkatalysator, der eine Platinkatalysatoremulsion auf Wasserbasis mit einer durchschnittlichen Teilchengröße von 0,2 µm ist, wird wie folgt hergestellt: 1 Gewichtsteil einer gemischten Lösung von einem 1,3-Divinyltetramethyldisiloxan und Isopropanolalkohol von einem 1,3-Divinyltetramethyldisiloxyankomplex von Platin wird bis zur Homogenität in eine wässrige Lösung von 27 Gewichtsteilen ionenausgetauschtem Wasser und 0,3 Gewichtsteilen des oben identifizierten Tensids gerührt; daraufhin wird die Platinkatalysatoremulsion auf Wasserbasis bis zur Homogenität in eine Menge, die 5 Gewichts-ppm Platinmetall mit Bezug auf die Siliconzusammensetzung bereitstellt, in die wie oben beschrieben hergestellte Siliconzusammensetzungsemulsion auf Wasserbasis gerührt, wodurch die Oberflächenresistenz eingestellt wird, wodurch es möglich gemacht wird, die Ladung auf der Oberfläche der Beschichtung zu beeinflussen; worauf das Inruhehalten einen Tag lang folgt, um eine Suspension auf Wasserbasis von vernetzten Siliconteilchen durch die durch Hydrosilylierung induzierte Vernetzung der Siliconzusammensetzung zu ergeben, wobei die durchschnittliche Teilchengröße der vernetzten Siliconteilchen in der resultierenden Suspension auf Wasserbasis 4,4 µm beträgt und die 90 %-Teilchengröße 7,5 µm beträgt,
**dadurch gekennzeichnet, dass** der beschichtete oder imprägnierte Stoff oder das beschichtete oder imprägnierte Gewebe in Pollenfiltern verwendet wird, um Teilchen wie Pollen, Bazillen und Sporen, die Reizung oder allergische Reaktionen verursachen, aus der Luft mittels einer Ladung, die derjenigen der zu entfernenden Teilchen entgegengesetzt ist, die aus der vorbeiströmenden Luft und/oder durch den Stoff oder das Gewebe entfernt werden sollen, aufzufangen.

2. Verwendung der Beschichtung nach Anspruch 1, wobei der Stoff oder das Gewebe in einem Filter angewendet wird.

3. Verwendung der Beschichtung nach den Ansprüchen 1 oder 2, **dadurch gekennzeichnet, dass** der Stoff oder das Gewebe durch Hindurchführen durch ein Beschichtungsbad hergestellt wird und/oder dass die Beschichtung darauf aufgesprüht wird.

## Revendications

1. Utilisation d'une composition de revêtement à incorporer dans ou à appliquer sur une étoffe ou un tissu, l'étoffe ou le tissu étant utilisé dans un matériau de filtration, de gaze ou de criblage, la composition de revêtement comprenant A) une émulsion de silicone à base d'eau et B) une émulsion de catalyseur de platine à base d'eau préparées respectivement de la manière suivante : A) 94,8 parties en poids de diméthylpolysiloxane à terminaison diméthylvinylsiloxy ayant une viscosité à 25 °C de 400 mm²/s contenant 2,5 % en poids d'un mélange ayant une viscosité à 25 °C d'environ 20 mm²/s de cycles de diméthylsiloxane sont mélangées jusqu'à homogénéité avec 5,2 parties en poids d'un copolymère de diméthylsiloxane-méthylhydrogénosiloxane à terminaison triméthylsiloxy ayant une viscosité à 25 °C de 50 mm²/s, ayant une teneur en hydrogène lié au silicium de 0,31 % en poids, cette quantité offre une valeur de 0,95 pour le rapport molaire de l'hydrogène lié au silicium au groupe vinyle dans le diméthylpolysiloxane, à quoi on ajoute une solution aqueuse de 30 parties en poids d'eau pure et de 1,0 partie en poids d'un tensioactif d'éther hexyldécylique de polyoxyéthylène, qui est le produit d'addition d'oxyde d'éthylène de l'alcool isocétylique provenant d'une huile végétale, le nombre de moles d'addition d'oxyde d'éthylène est de 10, le tensioactif a un HLB de 13,4 et est liquide à température ambiante ; suivi par une émulsification en utilisant un broyeur colloïdal, puis par une dilution avec 30 parties en poids d'eau pure pour donner une émulsion de la composition de silicone à base d'eau ; B) le catalyseur de platine est une émulsion de catalyseur de platine à base d'eau ayant une granulométrie moyenne de 0,2 µm qui est préparée de la manière suivante: 1 partie en poids d'une solution mixte de 1,3-divinyltétraméthyldisiloxane et d'isopropanol d'un complexe de platine de 1,3-divinyltétraméthyldisiloxane est agitée jusqu'à homogénéité dans une solution aqueuse de 27 parties en poids d'eau échangeuse d'ions et de 0,3 partie en poids du tensioactif identifié ci-dessus ; ensuite l'émulsion de catalyseur de platine à base d'eau est agitée jusqu'à homogénéité, en une quantité qui fournit 5 ppm en poids de métal platine par rapport à la composition de silicone, dans l'émulsion de composition de silicone à base d'eau préparée comme décrit ci-dessus, ajustant ainsi la résistance de surface, rendant possible l'influence de la charge sur la surface du revêtement; qui est suivi par un repos pendant une journée pour donner une suspension à base d'eau de particules de silicone réticulées par le biais d'une réticulation induite par hydrosilylation de la composition de silicone, la granulométrie moyenne des particules de silicone réticulées dans la suspension à base d'eau résultante étant de 4,4 µm et la granulométrie à 90 % est de 7,5 µm,
**caractérisée en ce que** l'étoffe ou le tissu revêtu ou imprégné est utilisé dans des filtres à pollen pour capturer des particules telles que le pollen, les germes et les spores de l'air qui provoquent des réactions d'irritation ou allergiques par le biais d'une charge qui est opposée à celle desdites particules à éliminer de l'air circulant dans et/ou à travers ladite étoffe ou ledit tissu.

2. Utilisation du revêtement selon la revendication 1, dans laquelle l'étoffe ou le tissu est appliqué dans un filtre.

3. Utilisation du revêtement selon la revendication 1 ou 2, **caractérisée en ce que** ladite étoffe ou ledit tissu est préparé par passage dans un bain de revêtement et/ou par le fait que le revêtement est pulvérisé dessus.
